# EUROPÄISCHE PATENTSCHRIFT

(11) **EP 2 452 227 B1**
(45) Veröffentlichungstag und Bekanntmachung des Hinweises auf die Patenterteilung: **18.06.2014**
(21) Anmeldenummer: 10722126.9
(22) Anmeldetag: 08.06.2010
(51) Int. Cl.: G02F 1/155, C01B 31/02

(54) **ELEKTROCHROME SCHICHTSTRUKTUR UND VERFAHREN ZU DEREN HERSTELLUNG**
ELECTROCHROMIC STRUCTURE AND METHOD OF MANUFACTURING THE SAME
STRUCTURE ELECTROCHROME ET SA METHODE DE FABRICATION

(30) Priorität: 10.07.2009 DE 102009026148
(43) Veröffentlichungstag der Anmeldung: 16.05.2012
(73) Patentinhaber: SAINT-GOBAIN GLASS FRANCE, 92400 Courbevoie (FR)
(72) Erfinder: MELCHER, Martin, 52134 Herzogenrath (DE); LETOCART, Philippe, B-4730 Raeren (BE); BRESSAND, Emily, F-75012 Paris (FR); GIRON, Jean-Christophe, B-4700 Eupen (BE)
(74) Vertreter: Lendvai, Tomas
(86) Internationale Anmeldenummer: PCT/EP2010/057981
(87) Internationale Veröffentlichungsnummer: WO 2011/003686

(56) Entgegenhaltungen:
- JP-A- 60 011 884
- JP-A- 2006 312 673
- JP-A- 2008 176 951
- JP-A- 2008 235 035
- US-B1- 6 747 779

## Beschreibung

Die Erfindung betrifft eine elektrochrome Schichtstruktur, eine elektrochrome Vorrichtung, ein Verfahren zur Herstellung einer elektrochromen Schichtstruktur sowie eine Verwendung einer elektrochromen Schichtstruktur und einer elektrochromen Vorrichtung.

Fenster sind eine wichtige Komponente in Gebäuden. Während früher Fensterscheiben lediglich dem Zweck einer freien Durchsicht nach draußen dienten, werden heutzutage wesentlich höhere Anforderungen an Verglasungen gestellt. Zum einen sollen verglaste Flächen für eine ideale Wärmeisolation von Innenräumen dienen, zum anderen sollen sie jedoch auch dafür sorgen, dass bei Sonneneinstrahlung Innenräume aufgrund der Verglasung nur bis zu einem gewünschten Grad erwärmt werden. Eine mögliche Steuerung des Lichteinfalls durch verglaste Flächen kann beispielsweise durch bewegliche Jalousien reguliert werden. Eine andere Möglichkeit bietet sich durch Verglasungen, die ihre optischen Eigenschaften wie Transparenz und Reflektivität auf Knopfdruck oder selbständig verändern. Solch schaltbare Verglasungen bieten Architekten einen größeren gestalterischen Spielraum für verglaste Flächen, ohne dass bewegte Teile vor oder in einer Fassade benötigt werden.

Zu Verglasungen, die ihre optischen Eigenschaften auf Knopfdruck oder selbständig verändern, gehören auch elektrochromen Verglasungen. Elektrochrome Verglasungen arbeiten auf dem Prinzip, dass sich die optischen Eigenschaften elektrochromer Schichten mittels der Aufnahme und Abgabe von Ladungsträgern verändern. Wenn ein Strom fließt, findet ein Austausch von Ladungsträgern statt und die elektrochrome Schicht ändert ihre Durchlässigkeit für das Sonnenlicht.

Typischerweise enthalten elektrochrome Verglasungen eine aktive Schicht, welche von transparenten Elektroden eingefasst ist. Durch Anlegen einer externen Spannung werden Ladungsträger in die aktive Schicht transportiert, wodurch die aktive Schicht ihre Transparenz gegenüber sichtbarem Licht verändert. Wird anschließend eine umgekehrte Spannung angelegt, wird die Ladungsträgerwanderung rückgängig gemacht, sodass die ursprüngliche Transparenz wiederhergestellt wird. Die aktive Schicht enthält einen ionenleitenden Elektrolyten und elektrochromes Material. Das elektrochrome Material ändert seine Transmissionseigenschaften für elektromagnetische Strahlung mit Änderung seiner Oxidationsstufen. Der Elektrolyt kann aus anorganischem Material bestehen, wie es in EP 0 867 752 und EP 0 831 360 offenbart wird. Der Elektrolyt kann aber auch aus organischem Material bestehen, was in EP 0 253 713 und EP 0 382 623 beschrieben ist. Die aktive Schicht kann dabei ganz oder teilweise in einem festen oder flüssigen Zustand vorliegen. Ein Elektrolyt mit festen und flüssigen Bestanteilen ist beispielsweise in der WO 2008/084168 offenbart. Enthalten die aktive Schicht und die Elektroden Polymer-Material, wird diese Kombination als all-polymeric elektrochromes System bezeichnet. Solche Systeme sind beispielsweise aus US 6,747,779 B1 bekannt.

Problematisch ist dabei, dass ein vollständiger Transparenzwechsel der aktiven Schicht bis zu mehreren Minuten in Anspruch nehmen kann. Dies stellt bei einfachen Gebäudeverglasungen kein Problem dar, ist jedoch für den Einsatz beispielsweise in Kraftfahrzeugen, Flugzeugen und Schienenfahrzeugen inakzeptabel. Es muss hier gewährleistet sein, dass bei einem spontanen externen Helldunkelwechsel, wie er zum Beispiel bei Einfahrt in einen Tunnel auftritt, eine sofortige Transparenzerhöhung der elektrochromen Verglasung stattfindet. Dasselbe gilt für Notfallsituationen, in welchen gefordert wird, dass eine maximale Transparenz von elektrochromen Verglasungen, beispielsweise in Kraftfahrzeugen, innerhalb von Sekundenbruchteilen gewährleistet ist.

Eine der Ursachen, welche zu einem zeitlich langsamen Umfärbevorgang der aktiven Schicht bei elektrochromen Verglasungen führt, ist die niedrige elektrische Leitfähigkeit der Elektroden, welche einen möglichen Stromfluss zur Transparenzveränderung der aktiven Schicht begrenzt.

Um dieses Problem zu umgehen, offenbart US 6,747,779 B1, zusätzlich eine der Elektroden mit einem elektrisch leitfähigen Netzwerk zu versehen. Dieses Netzwerk wird durch Metalldrähte oder unter Verwendung einer Paste hergestellt. Die Paste enthält Silberteilchen und Glasfritten.

Die Verwendung einer leitfähigen Paste besitzt jedoch den Nachteil, dass die Verfahren zur Stabilisierung der Paste die Verwendung hoher Prozesstemperaturen erfordern. Die hohen Temperaturen sind insbesondere zum Schmelzen der Glasfritten und / oder Sintern der Silberteilchen erforderlich. Durch das Verfahren wird die aktive Schicht, die empfindlich gegen hohe Temperaturen ist, angegriffen. Alternative Niedertemperaturverfahren zur Stabilisierung und zum Aushärten von Pasten, sind anderseits sehr zeitaufwändig.

Die Bildung eines elektrisch leitfähigen Netzwerkes mit Metalldrähten ist materialintensiv, da Aufbringen von fertigen Metalldrähten eine höhere Menge an Metallmaterial erfordert als es für die geforderte elektrische Leitfähigkeit des Netzwerks notwendig ist.

Bei der Bildung von elektrischen Netzwerken mit Metalldrähten ist auch zu beachten, dass die Wahl der möglichen Netzwerk-Geometrien eingeschränkt ist.

Der Erfindung liegt die Aufgabe zugrunde, eine verbesserte elektrochrome Schichtstruktur, eine verbesserte elektrochrome Vorrichtung und ein verbessertes Verfahren zur Herstellung einer elektrochromen Schichtstruktur zu schaffen.

Außerdem liegt der Erfindung die Aufgabe zugrunde, eine neue Verwendung einer verbesserten elektrochromen Schichtstruktur und einer verbesserten elektrochromen Vorrichtung zu finden.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird eine elektrochrome Schichtstruktur mit mindestens einer aktiven elektrochromatisch Schicht geschaffen, wobei die Schichtstruktur mindestens zwei Elektroden aufweist und mindestens eine der Elektroden ein elektrisch leitfähiges Netzwerk von Leiterbahnen aufweist und die Leiterbahnen Nanoteilchen enthalten, wobei die Leiterbahnen eine Breite unter 10 µm und einen Abstand über 1 mm aufweisen und wobei die Nanoteilchen in Form eines Verbundwerkstoffs mit einem Kunststoff die Leiterbahnen bilden.

Diese Nanoteilchen können einen Durchmesser von 1 nm bis 500 nm aufweisen. Die Nanoteilchen weisen jedoch einen Durchmesser von 5 nm bis 100 nm auf, und besonders bevorzugt weisen die Nanoteilchen einen Durchmesser von 10 nm bis 30 nm auf.

Die Nanoteilchen enthalten Metalle und / oder Kohlenstoffverbindungen. Bevorzugt enthalten die Nanoteilchen Silber, Kupfer, Aluminium, Ruß (Leitruß) und / oder Kohlenstoff-Nanoröhren sowie Gemische davon.

Die Verwendung von Nanoteilchen zur Bildung der Leiterbahnen hat den Vorteil, dass bei dieser Teilchengröße die für Druckverfahren benötigte Prozesstemperatur zur Stabilisierung der Leiterbahnen beziehungsweise Sinterung reduziert wird. Somit ist es möglich, bei einer Durchmesserverteilung im Bereich unter 100 nm die Prozesstemperatur auf bis zu 70 °C abzusenken. In diesem Temperaturbereich ist die aktive Schicht nicht temperaturempfindlich, da die aktive Schicht darauf ausgelegt ist, in einem Scheibenverbund bei maximaler Sonneneinstrahlung Temperaturen über 70 °C zu widerstehen.

Zum Schutz der aktiven Schicht und der Elektroden vor äußeren Einflüssen, wie Feuchtigkeit oder mechanischer Belastung, weist die elektrochrome Schichtstruktur transparente Schutzschichten und / oder Schutzscheiben auf.

Bevorzugt enthält die Schutzschicht Siliziumnitride, Oxide wie Siliziumoxid, Siliziumnitrid oder Zinkoxid, Indiumoxid, Zinnoxid und / oder Gemische davon mit einer bevorzugten Dicke von 5 nm bis 500 nm.

Nach einer bevorzugten Ausführungsform der Erfindung kann die Schutzscheibe der Schichtstruktur ferner Germanium, Silizium, Silikatgläser wie Natron-Kalk-Glas, Borosilikat-Glas, Saphir oder Polymere wie Polystyrol, Polyamid, Polyester, Polyvinylchlorid, Polycarbonat, Ethylen-Vinyl-Acetat, plastizitiertes Polyvinyl-Butyral, Polyimid, Polyethylenterephthalat, Polyethylen, Polypropylen, Polyurethan, lonomere und / oder Polymethylmethacrylat sowie Copolymere und / oder Kombinationen enthalten. Die Schutzscheiben weisen eine bevorzugte Dicke von 0,01 mm bis 25 mm auf. Die Schutzscheiben können starre Scheiben oder mechanisch flexibel sein und Foliencharakter haben. Schutzscheiben haben den Vorteil, dass diese die aktive Schicht und das Elektrodenmaterial vor äußeren Umwelteinflüssen abkapseln und insbesondere vor mechanischen Einwirkungen schützen.

Der Schutz der aktiven Schicht und / oder der Elektroden kann ferner durch eine zwischen der aktiven Schicht und der Schutzscheibe liegende weitere Schutzschicht enthaltend Argon, Xenon, Stickstoff, Luft und / oder Gemische mit einem Druck von 1000 Pa bis 200.000 Pa verbessert werden. Ein prinzipiell geeigneter Aufbau für eine gasförmige Schutzschicht ist bei Mehrfach-Isolierverglasungen bekannt.

Bevorzugt ist das Netzwerk der von Nanoteilchen gebildeten Leiterbahnen zwischen der aktiven Schicht und der Schutzschicht und / oder zwischen der aktiven Schicht und der Schutzscheibe ausgebildet.

Dies ermöglicht die Anwendung verschiedener Herstellungsverfahren, wobei bevorzugt das Leiterbahnennetzwerk direkt auf die aktive Schicht aufgebracht wird, das Leiterbahnennetzwerk auf die Elektrode aufgebracht wird oder das Leiterbahnennetzwerk auf eine optisch transparente und leitfähige Schutzschicht aufgebracht wird. Damit eröffnet sich ein breites Feld von alternativen Herstellungsmethoden von elektrochromen Schichtstrukturen, welche flexibel physikalischen als auch arbeitsflussbedingten Gegebenheiten angepasst werden können. So ist zu erwarten, dass bei direkter Aufbringung des elektrisch leitfähigen Netzwerks auf die aktive Schicht ein Ladungsträgeraustausch in der aktiven Schicht stark erhöht wird, sodass sich eine solche Ausbildung insbesondere für extrem schnell zu schaltende elektrochrome Schichtstrukturen eignet. Ebenfalls ist es denkbar, dass die aktive Schicht gemeinsam mit den Elektroden in einem Arbeitsfluss herzustellen und das Aufbringen des Leiterbahnennetzwerks erst anschließend erfolgt. In diesem Fall ergibt sich die Möglichkeit der flexiblen Wahl der anschließenden Aufbringung des Leiterbahnennetzwerks auf eine der Elektroden oder auf eine im Bereich des sichtbaren Lichts optisch transparenten Schutzschicht, wobei sich in diesem Fall das Netzwerk von Leiterbahnen zwischen der Elektrode und der Schutzschicht befindet.

Ebenso ist es möglich die elektrochrome Schichtstruktur mit mindestens zwei übereinander liegenden aktiven Schichten und mit dazwischen liegenden Zwischenelektroden auszugestalten. Diese Ausführungsform hat die Vorteile, dass die aktiven Schichten unabhängig voneinander geschaltet werden können.

Nach der Erfindung ist das elektrisch leitfähige Netzwerk makroskopisch gesehen optisch transparent. Makroskopisch gesehen optisch transparent bedeutet, dass die elektrisch leitfähigen Netzwerke von Leiterbahnen mikroskopisch für sich genommen opak sein können, aufgrund des geringen Flächenanteils bezogen auf die Gesamtfläche der Schichtstruktur makroskopisch gesehen optisch transparent erscheinen. Die optische Transparenz beinhaltet das technisch nutzbare elektromagnetische Strahlungsspektrum, bevorzugt das ultraviolette, sichtbare und infrarote Strahlungsspektrum. Damit kann die elektrochrome Schichtstruktur insbesondere auch bei Verglasungen Anwendung finden, welche zur permanenten Durchsicht beim Führen von Beförderungsmitteln, wie beispielsweise Flugzeugen, Kraftfahrzeugen und Zügen, eine möglichst ungehinderte, jedoch abdunkelbare Durchsichtsmöglichkeit erfordern.

Nach der Erfindung weisen die Leiterbahnen eine Breite unter 10 µm auf, wobei die Leiterbahnen einen gegenseitigen Abstand über 1 mm aufweisen. Vorzugsweise sind die Leiterbahnen bezüglich deren Breite und Abstand jedoch so dimensioniert, dass mit möglichst minimalem Materialaufwand zur Bildung der Leiterbahnen eine ausreichend hohe elektrische Leitfähigkeit zum Ladungsträgertransport und eine ausreichend hohe optische Transparenz gewährleistet werden kann.

Nach einer Ausführungsform der Erfindung weist das elektrisch leitfähige Netzwerk Leiterbahnen mit unterschiedlicher Schichtdicke auf. Die Leiterbahnen des Netzwerks besitzen damit unterschiedliche elektrische Leitfähigkeiten. Ein Vorteil dieser Ausführungsform besteht insbesondere darin, dass durch die unterschiedliche elektrische Leitfähigkeit unterschiedliche Bereiche der aktiven Schicht unterschiedlich beschaltet werden können.

Nach einer weiteren Ausführungsform der Erfindung handelt es sich bei den Nanoteilchen um Kohlenstoff-Nanoteilchen, wobei es sich bei den Kohlenstoff-Nanoteilchen um Kohlenstoff-Nanoröhren und/oder Ruß handelt. Ruß besteht aus kleinen Teilchen, mit einem typischen Größenbereich zwischen 10 nm bis 100 nm. Bei der Verwendung von Ruß kann als Nanoteilchen für Leiterbahnen sogenannter Leitruß zum Einsatz kommen, der eine besonders gute elektrische Leitfähigkeit aufweist.

Die Verwendung von Kohlenstoff-Nanoröhren hat den Vorteil, dass diese aufgrund ihres hohen Aspektverhältnisses zwischen Durchmesser und Länge eine hohe elektrische Leitfähigkeit aufweisen. Damit genügt eine extrem geringe Menge an Kohlenstoff-Nanoröhren, um dennoch eine hohe elektrische Leitfähigkeit der dadurch gebildeten Leiterbahnen zu gewährleisten.

Die Nanoteilchen bilden die Leiterbahnen in Form eines Verbundwerkstoffs mit einem Kunststoff oder Silikatglas. Bei einem solchen Kunststoff kann es sich um Polyacrylate, Epoxide und / oder Polyanilin sowie Copolymere und / oder Kombinationen davon handeln. Durch die zusätzliche Verwendung von Kunststoffen als Träger der Leiterbahnen wird zum einen deren mechanische Stabilität erhöht. Zum anderen wird durch die Verwendung von leitfähigen Kunststoffen, wie zum Beispiel Polyanilin, die elektrische Leitfähigkeit der durch Nanoteilchen gebildeten Leiterbahnen weiter erhöht. Zum dritten dient die Verwendung von Kunststoffen in den Leiterbahnen, welche die Nanoteilchen gegenüber beispielsweise der aktiven Schicht abkapseln, dazu, einen direkten räumlichen Kontakt zwischen aktiver Schicht und Nanoteilchen zu verhindern. Damit können als aktive Schicht auch ionenleitfähige Materialien verwendet werden, welche ohne Kapselung der Nanoteilchen mit den Nanoteilchen eine chemische oder elektrochemische Reaktion eingehen würden. Damit erhöht sich die Flexibilität bezüglich der Wahl der eingesetzten ionenleitfähigen Materialien in der aktiven Schicht.

In einem weiteren Aspekt betrifft die Erfindung eine elektrochrome Vorrichtung mit der erfindungsgemäßen Schichtstruktur im elektrischen Kontakt mit einer Steuereinheit.

In einer bevorzugten Ausführungsform enthält die elektrochrome Vorrichtung mindestens zwei Schutzscheiben. Es kann sich bei einer solch elektrochromen Vorrichtung um eine elektrochrome Verglasung handeln.

Nach einer weiteren Ausführungsform der Erfindung wird zumindest eine Schutzschicht der elektrochromen Schichtstruktur durch eine äußere Schutzscheibe gebildet oder eine äußere Schutzscheibe durch eine Schutzschicht der elektrochromen Schichtstruktur gebildet. Es ist möglich, durch geeignete Wahl des optisch transparenten Schutzschichtmaterials bei der Verwendung der elektrochromen Vorrichtung als Fensterverglasung auf eine zusätzliche Glasscheibe zu verzichten. Kunststoffmaterialien können zum Einsatz kommen, welche zum einen im Bereich des sichtbaren Lichtes optisch transparent sind und zum anderen eine hohe mechanische Härte aufweisen, ohne jedoch das Gewicht von herkömmlichen Fenstergläsern zu haben. Damit ergibt sich die Möglichkeit des Herstellens von elektrochromen Verglasungen mit wesentlich geringerem Gewicht, als dies bei handelsüblichen Verglasungen der Fall ist.

Die Schutzscheibe kann in der elektrochromen Vorrichtung als Verbundscheibe aus mehreren Schichten aufgebaut sein und bevorzugt eine Polymerschicht als Haftvermittler enthalten. Besonders bevorzugt kann die Schichtstruktur mit einer weiteren Schutzscheibe als ein Verbundglas eine elektrochrome Vorrichtung ausbilden.

Damit handelt es sich bei der elektrochromen Vorrichtung um eine Fensterscheibe und bevorzugt eine Verbundglasscheibe, wobei die Oberflächen durch Silikatglas und/oder Polymere gebildet werden.

In einer Ausgestaltung der elektrochromen Vorrichtung handelt es sich um eine Doppel- oder Mehrfach-Isolierverglasung, wobei die elektrochrome Schichtstruktur sich auf inneren und / oder äußeren Fensterscheiben der Isolierverglasung befindet. Ein gasförmiges Schutzvolumen der Schichtstruktur ist insbesondere bei Verwendung der elektrochromen Schichtstruktur in Doppel- oder Mehrfach-Isolierverglasungen als elektrochrome Vorrichtung vorteilhaft, da der Isolierglasaufbau ein Schutzvolumen bereitstellt. In dieser Ausgestaltung reduziert das Schutzvolumen auch den Wärmedurchgang durch die Verglasung und wirkt thermisch isolierend.

In einem weiteren Aspekt betrifft die Erfindung ein Verfahren zur Herstellung einer elektrochromen Schichtstruktur gemäß Anspruch 14.

Nach einer Ausführungsform der Erfindung erfolgt das Aufbringen des Netzwerks von Nanoteilchen bevorzugt durch ein Druckverfahren wie Siebdruckverfahren, Druckverfahren mit einer Gravurwalze und besonders bevorzugt Tintenstrahldruckverfahren, Aerosoljetdruckverfahren, Impulsjetdruckverfahren und / oder Rollenrotationsdruckverfahren, wie Flexodruck.

Durch das erfindungsgemäße Verfahren können beliebige Geometrien auf Flächen gedruckt werden. Ebenso ist ein kontaktloses Aufdrucken mit erfindungsgemäßen Verfahren möglich. Damit ist es auch möglich zwischen der aktiven Schicht und der Elektrode ein leitfähiges Netzwerk aufzudrucken. Bevorzugte Geometrien sind beispielsweise parallel oder antiparallel angeordnete Linien und Kurven, Linien oder Kurven mit Querverbindungen, regelmäßige oder unregelmäßige netzartige Strukturen, zusammenhängende Flächen mit regelmäßigen oder unregelmäßigen Aussparungen sowie nicht zusammenhängende Rechtecke oder Ellipsoide.

Die Wahl der geeigneten flüssigen Kunststoffen hängt dabei von verschiedenen Kriterien ab, wie zum Beispiel Prozesstemperatur zur Stabitisierung der Netzwerke, Aggregationsverhalten der Nanoteilchen in der flüssigen Kunststoffen, die spätere Verwendung des ausgehärteten Kunststoffs als schützende leitfähige Kapselung der Nanoteilchen.

Nach einer weiteren Ausführungsform der Erfindung erfolgt das Aufbringen des Netzwerks von Nanoteilchen durch Aufbringen einer Dispersion, wobei die Dispersion die Nanoteilchen und eine Flüssigkeit umfasst und es sich bei der Flüssigkeit um Wasser und/oder ein organisches Lösungsmittel und/oder einen flüssigen Kunststoff handelt.

Die Größe der erfindungsgemäßen Vorrichtungen kann breit variieren und richtet sich nach dem jeweiligen Verwendungszweck im Rahmen der erfindungsgemäßen Verwendung. So können die erfindungsgemäßen Vorrichtungen Abmessungen in der Größenordnung von wenigen Zentimetern bis zu mehreren Metern haben. Insbesondere die planaren oder leicht oder stark in eine Richtung oder mehreren Richtungen des Raumes gebogenen oder gekrümmten Vorrichtungen können eine Fläche in der Größenordnung von 100 cm² bis 25 m², vorzugsweise >1 m² oder PLF (3,21 m x 6,0 m = 19,26 m²), was das "Bandmaß" der Glasindustrie ist, aufweisen. Die erfindungsgemäßen Vorrichtungen können aber auch Flächen haben, wie sie Abdeckungen von Scheinwerfern, Windschutzscheiben, Seitenscheiben, Heckscheiben und Glasdächer für Kraftfahrzeuge oder großflächige Scheiben, insbesondere wie sie im Bausektor verwendet werden, üblicherweise aufweisen.

Nach einer weiteren Ausführungsform der Erfindung erfolgt das Stabilisieren beziehungsweise Sintern des Netzwerks von Nanoteilchen zu Leiterbahnen durch Wärmeleitung und elektromagnetische Strahlung in Öfen, jedoch bevorzugt durch Infrarotstrahlung und Ultraviolettstrahlung und besonders bevorzugt durch Laserbestrahlung und / oder Mikrowellenbestrahlung. Die Verwendung von Laserstrahlung hat den Vorteil, dass durch Ausrichtung eines fokussierten Laserstrahls auf die gewünschte Netzwerkstruktur von Nanoteilchen ausschließlich an den gewünschten räumlichen Netzwerkstrukturen, an welchen der Laserstrahl auf die Nanoteilchen auftrifft, ein Stabilisierungsvorgang des Netzwerks und damit gegebenenfalls auch ein Verbinden der Nanoteilchen mit den Elektroden und/oder der aktiven Schicht stattfindet. Nanoteilchen, welche außerhalb der durch den Laserstrahl abgefahrenen gewünschten Netzwerkstruktur liegen, werden von dem Erhitzungsvorgang nicht erfasst, sodass hier keine Aushärtung und keine direkte Prozessierung stattfinden. Ein anschließender Waschvorgang ermöglicht somit, Nanoteilchen, welche nicht von der das Netzwerk definierenden Laserstrahlung erfasst wurden, zu entfernen. Somit kann in einfacher Weise ein gut definiertes leitfähiges Netzwerk von Nanoteilchen erzeugt werden.

Im Weiteren werden Ausführungsformen der Erfindung mit Bezugnahme auf die Zeichnungen näher erläutert. Es zeigen:
- Figur 1: eine schematische Ansicht einer elektrochromen Schichtstruktur,
- Figur 2: eine schematische Ansicht einer weiteren elektrochromen Schichtstruktur mit einer Schutzschicht,
- Figur 3: eine schematische Ansicht eines Netzwerks von Nanoteilchen auf einer elektrochromatisch aktiven Schicht sowie eine mikroskopische Vergrößerung des Leiterbahnennetzwerks,
- Figur 4: ein Flussdiagramm eines Verfahrens zur Herstellung einer elektrochromen Schichtstruktur,
- Figur 5: ein Flussdiagramm eines Verfahrens zur Herstellung einer elektrochromen Schichtstruktur,
- Figur 6: eine schematische Ansicht einer weiteren elektrochromen Schichtstruktur mit zwei aktiven Schichten,
- Figur 7: eine schematische Ansicht einer elektrochromen Schichtstruktur mit einer gasförmigen Schutzschicht,
- Figur 8: eine schematische Ansicht einer elektrochromen Schichtstruktur in einem Verbundglas,
- Figur 9: eine schematische Ansicht eines weiteren Ausführungsbeispiels einer elektrochromen Schichtstruktur mit einem Flüssig-Elektrolyten in der aktiven Schicht und
- Figur 10: eine schematische Ansicht eines weiteren Ausführungsbeispiels einer elektrochromen Schichtstruktur mit einer mehrschichtigen Elektrode.

Im Folgenden sind einander ähnliche Elemente mit denselben Bezugszeichen gekennzeichnet.

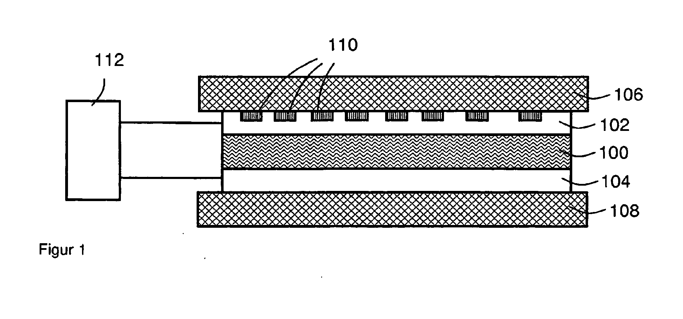

Figur 1 zeigt eine schematische Ansicht eines Ausführungsbeispiels einer elektrochromen Schichtstruktur. Die elektrochrome Schichtstruktur umfasst eine elektrochromatisch aktive Schicht 100, die zwischen zwei Elektroden 102 und 104 eingebettet ist. Außerdem sind diese Elektroden 102 und 104 jeweils auf der der aktiven Schicht abgewandten Seite mit transparenten Schutzscheiben 106 und 108 abgedeckt. Bei der elektrochromen Schichtstruktur der Figur 1 kann es sich um eine elektrochrome Schichtstruktur mit einem anorganischen Festkörperelektrolyten und bei den transparenten Schutzscheiben 106 und 108 um Borosilikatgläser handeln.

Die elektrochrome Steuereinheit 112 dient durch Anlegen einer Spannung zwischen den Elektroden 102 und 104 als eine Transparenzkontrolle der aktiven Schicht gegenüber einfallendem Licht. Bei der Elektrode 104 handelt es sich um eine Anode und bei der,Elektrode 102 um eine Kathode. Durch Anlegen einer positiven Spannung an die Anode 104 und einer negativen Spannung an die Kathode 102 findet ein Ionentransport durch die aktive Schicht 100 statt, welche ein ionenleitfähiges Polymer enthält. Die Kathode 102 enthält Wolframoxid. Die Anode 104 enthält Wasserstoffionen. Durch Anlegen von Spannung zwischen der Anode und der Kathode wandern Wasserstoff-Ionen durch das ionenleitfähige Polymer in die Kathode 102 und bilden dort mit Wolframoxid Farbzentren, die einfallendes Licht absorbieren oder reflektieren. Wird danach eine umgekehrte Spannung angelegt, kehrt sich dieser Effekt um, sodass eine Entfärbung der Kathode 102 stattfindet.

Die Ionenwanderung hängt nun zum einen stark von der Wahl und Dicke der aktiven Schicht 100 ab, als auch von der Materialwahl und Dicke der Kathode 102. Hier ergibt sich das Problem, dass bei zu dünner Dimensionierung der Kathode 102 deren optische Transparenz hoch ist, jedoch die elektrische Leitfähigkeit so gering wird, dass ein elektrochromatischer Färbungs- oder Entfärbungsvorgang aufgrund des geringen Ladungstransports erhebliche Zeit benötigt. Wird hingegen die Leitfähigkeit der Kathodenschicht 102 durch Vergrößerung deren Dicke erhöht, kann der elektrochromatische Transparenzwechselvorgang beschleunigt werden, jedoch auf Kosten einer verminderten Maximaltransparenz und der erhöhten Dicke und damit der Lichtdurchlässigkeit der Schicht 102.

Um dieses Problem zu lösen, ist das Netzwerk 110 von Leiterbahnen in der Figur 1 zwischen der Schutzscheibe 106 und der Elektrode 102 eingebracht. Dieses Netzwerk von Leiterbahnen wird durch Nanoteilchen (300) gebildet, wobei das Netzwerk von Leiterbahnen zur Konsequenz hat, dass zum einen die Schichtdicke der Elektrode 102 gering gehalten wird, zum anderen die elektrische Leitfähigkeit aufgrund der zusätzlichen Leiterbahnen der elektrochromen Schichtstruktur dennoch ausreichend ist.

Die Leiterbahnen 110 sind vorzugsweise so angeordnet, dass makroskopisch gesehen das durch die Leiterbahnen gebildete Netzwerk optisch transparent ist. Dies kann durch eine extrem dünne Dimensionierung der Leiterbahnen, mit einer Breite unter 10 µm und mit einem großen Abstand derselben, über 1 mm, realisiert werden.

Wie aus der Figur 1 ersichtlich, befindet sich das elektrisch leitfähige Netzwerk von Leiterbahnen, welche durch Nanoteilchen (300) gebildet sind, zwischen der transparenten Schutzscheibe 106 und der Elektrode 102.

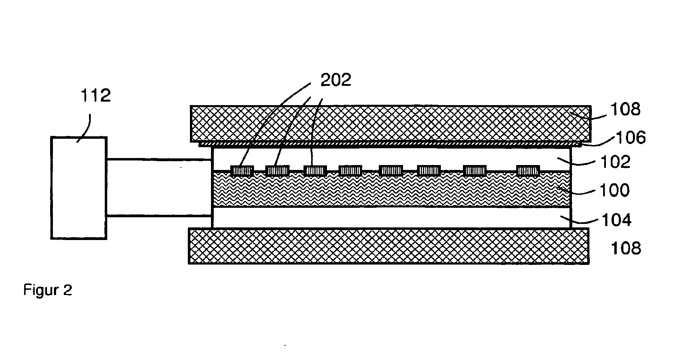

Eine alternative Ausführung dazu ist in der Figur 2 gezeigt. Hier befindet sich ein elektrisch leitfähiges Netzwerk 202 zwischen der aktiven Schicht 100 und der Elektrode 102. Außerdem ist in der Figur 2 eine Schutzscheibe 106 gezeigt, welche sich zwischen der aktiven Schicht 100 und der Schutzscheibe 108 befindet. Die Schutzscheibe 106 ist eine Kunststoffschicht, welche Polyvinylbutyral (PVB) enthält. Bei der Schutzscheibe 108 handelt es sich um Borosilikatglasscheiben. Eine solche PVB-Folie wird typischerweise bei Temperaturen von etwa 150°C auf die Elektrode 102 aufgeschmolzen, sodass nach Abkühlen ein dauerhafter Verbund zwischen Kathode 102 und PVB-Folie 106 (PVB Schutzscheibe 106) vorliegt, welche die Elektrode 102 und die aktive Schicht 100 vor äußeren Umwelteinflüssen schützt.

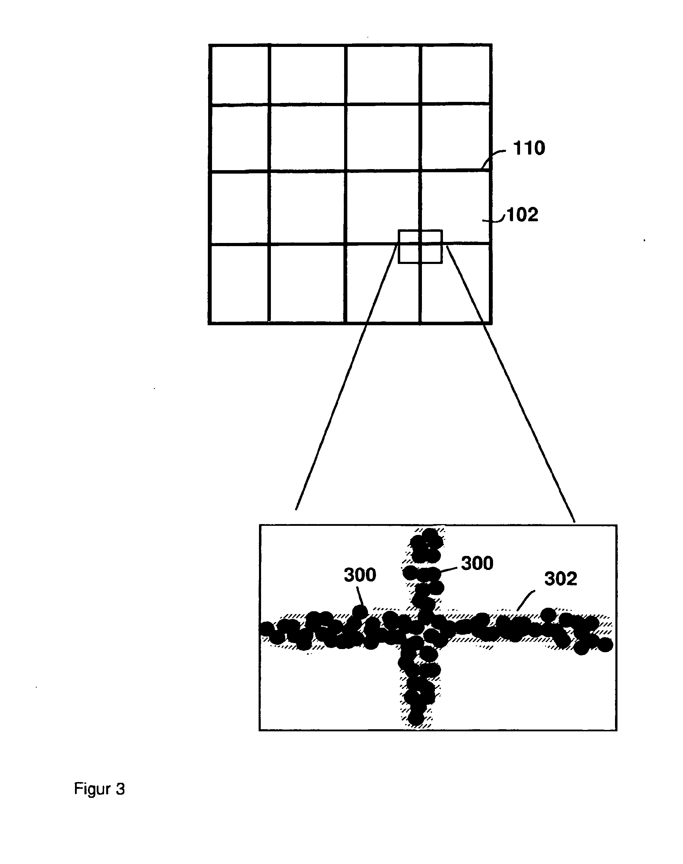

Figur 3 zeigt ein elektrisch leitfähiges Netzwerk von Leiterbahnen 110 auf einer aktiven Schicht 102. Im Beispiel der Figur 3 bildet das hierdurch gebildete Netzwerk eine regelmäßige rechteckige Anordnung von Leiterbahnen, welche aufgrund des großen Zwischenabstandes zwischen den einzelnen Leiterbahnen eine makroskopisch gesehen gute Durchsicht gewährleistet.

Bei einer Vergrößerung des elektrisch leitfähigen Netzwerks von Leiterbahnen 110 werden die in Figur 3 gezeigten Nanoteilchen 300 sichtbar. Die Nanoteilchen 300 sind dabei so relativ zueinander angeordnet, dass sie elektrisch leitfähige Leiterbahnen bilden.

In der Vergrößerung der Figur 3 ist weiter ein Polymer 302 zu sehen, in welches die Nanoteilchen 300 eingebettet sind. Polymer 302 ist elektrisch leitfähig und mit Nanoteilchen 300 bis zu einem bestimmten Füllgrad gefüllt. Ab einem bestimmten Füllgrad erhöht sich die elektrische Leitfähigkeit der so gebildeten Leiterbahnen sprunghaft. Unterhalb eines bestimmten Füllgrades ist die elektrische Leitfähigkeit zu gering. Weit oberhalb eines bestimmten Füllgrades steigert sich die elektrische Leitfähigkeit selbst bei weiterer Zugabe von Nanoteilchen 300 nur noch unwesentlich. Durch geeignete Wahl eines Verbundwerkstoffs bestehend aus Nanoteilchen 300 und Füllmaterial 302 kann ein optimaler Verbundwerkstoff gewählt werden, der eine hohe elektrische Leitfähigkeit, eine hohe mechanische Stabilität als auch eine hohe chemische Inertheit aufweist. -

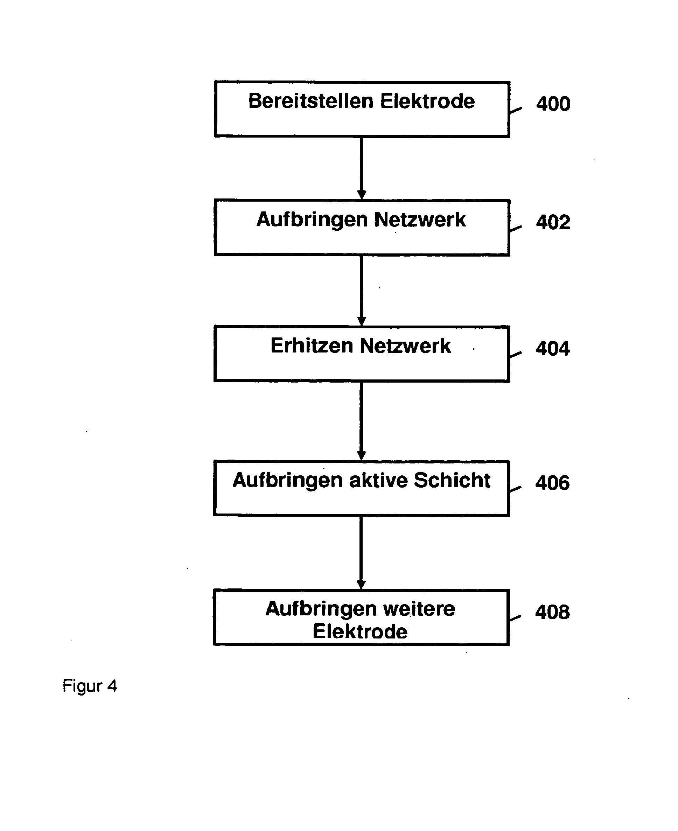

Figur 4 zeigt ein Verfahren zur Herstellung einer elektrochromen Schichtstruktur. Das Verfahren beginnt mit Schritt 400 durch Bereitstellen einer Elektrode, vorzugsweise einer Kathode. Auf die Kathode wird in Schritt 402 ein Netzwerk aufgebracht, das Nanoteilchen 300 enthält. In Schritt 404 wird dieses Netzwerk erhitzt, um so mittels eines Sintervorgangs zu einem mechanisch stabilen und elektrisch leitfähigen Netzwerk von Leiterbahnen zu gelangen. Dem folgt Schritt 406 mit dem Aufbringen einer elektrochromatisch aktiven Schicht, wobei diese aktive Schicht entweder auf das Netzwerk oder auf die Elektrode aufgebracht werden kann. Schließlich endet das Verfahren mit Schritt 408 durch Aufbringen einer weiteren Elektrode auf die aktive Schicht, die auf die Seite der aktiven Schicht aufgebracht wird, welche der in Schritt 400 bereitgestellten Elektrode gegenüberliegt.

Es sei hier angemerkt, dass das Verfahren zum Aufbringen des Netzwerks sowohl dafür geeignet ist, das Netzwerk auf die Kathode als auch auf die Anode in Form von zwei separaten Netzwerken aufzubringen.

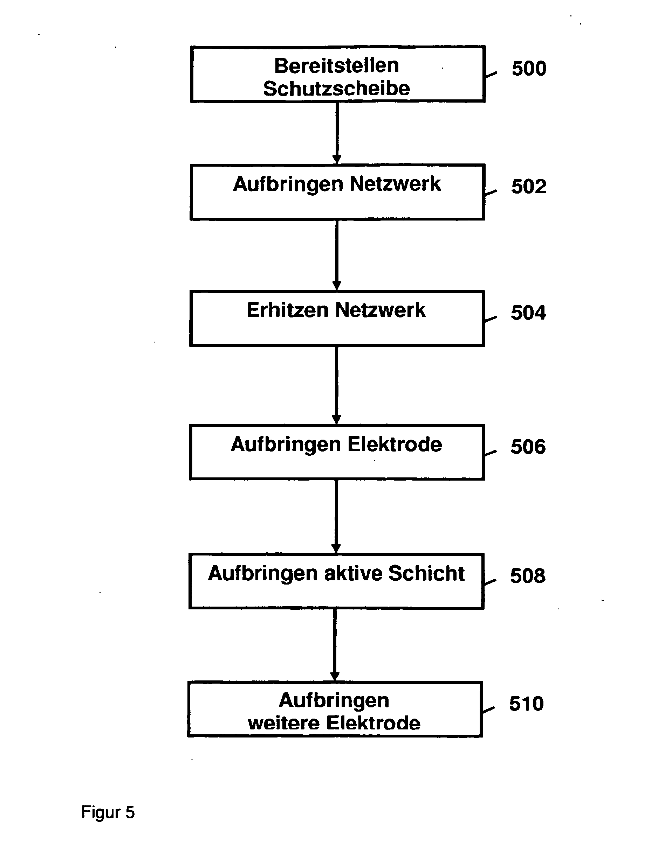

Eine alternative Ausführungsform eines Verfahrens zur Herstellung einer elektrochromen Schichtstruktur ist in dem Flussdiagramm der Figur 5 dargestellt. Hier wird in Schritt 500 eine Schutzscheibe, beispielsweise eine PVB-Schicht auf einer Silikatglasscheibe, bereitgestellt. Anstatt der Verwendung einer PVB-Schicht ist es auch möglich, eine Glasscheibe, Kunststoffscheibe oder Ähnliches zu verwenden, welche im Falle der Verwendung der elektrochromen Schichtstruktur als elektrochrome Verglasung direkt als Trennscheibe zur äußeren Umgebung der elektrochromen Verglasung dient.

Nachdem in Schritt 500 die Schutzscheibe bereitgestellt wird, wird in Schritt 502 das Netzwerk auf die Schutzscheibe aufgebracht. Das Netzwerk wird in Schritt 504 wiederum erhitzt, was zur Härtung, Sinterung oder allgemein Stabilisierung führt. Daraufhin wird in Schritt 506 eine Elektrode auf das so gebildete Netzwerk aufgebracht, worauf in Schritt 508 eine aktive Schicht auf die Elektrode aufgebracht wird. Schließlich wird in Schritt 510 eine weitere Elektrode auf die aktive Schicht aufgebracht.

Alternativ zu den in Figur 5 gezeigten Schritten ist es auch möglich, das Verfahren zuerst mit den Schritten 500 und 506 bis 510 zu beginnen, wobei eine Elektrode auf einer aktiven Schicht erhalten wird, auf die das Netzwerk mit den Schritten 502 und 504 aufgebracht wird. In Figur 5 ist nicht gezeigt, wie eine Schutzschicht auf die Elektrode mit dem Netzwerk aufgebracht wird. Das ist bei der Verwendung der so hergestellten elektrochromen Schichtstruktur in Form einer elektrochromen Verglasung notwendig. In diesem Fall handelt es sich bei der aufgebrachten Schutzschicht vorzugsweise um eine weitere Oxidschicht, eine Schutzgasschicht, Glasscheibe und / oder Kunststoffscheibe.

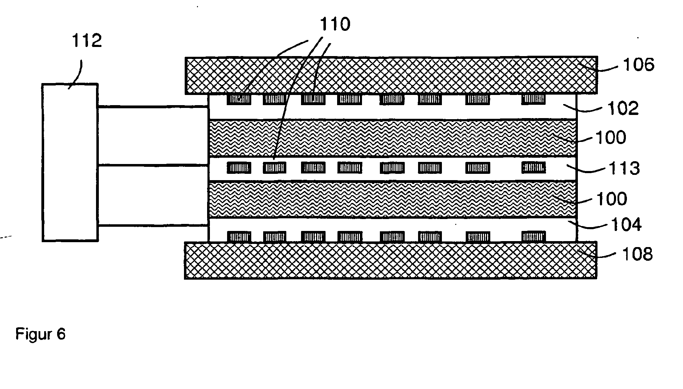

Figur 6 zeigt eine schematische Ansicht einer weiteren Ausführungsform einer elektrochromen Schichtstruktur. Die elektrochrome Schichtstruktur umfasst zwei elektrochromatisch aktive Schichten 100, wobei die Schichten zwischen einer äußeren Elektrode 102 oder 104 und einer Zwischenelektrode 113 eingebettet sind. Die äußeren Elektroden 102 und 104 sind jeweils auf der der aktiven Schicht abgewandten Seite mit transparenten Schutzscheiben 106 und 108 abgedeckt. Beispielsweise kann es sich bei der elektrochromen Schichtstruktur der Figur 6 um zwei elektrochrome Schichtstrukturen nach Figur 1 handeln, wobei es sich bei den transparenten Schutzscheiben 106 und 108 um Borosilikatglas handelt.

Die Elektroden 102 und 104 sowie die Zwischenelektrode weisen elektrisch leitfähige Netzwerke 110 auf. Die Wirkung der elektrisch leitfähigen Netzwerke 110 entspricht den Beobachtungen des Ausführungsbeispiels zur Figur 1.

In der Figur 6 ist weiter eine elektrochrome Steuereinheit 112 gezeigt, welche durch Anlegen einer Spannung zwischen den Elektroden 102 und 113 sowie 104 und 113 zu einer Transparenzkontrolle der aktiven Schichten 100 gegenüber einfallendem Licht dienen. Über die äußeren Elektroden 102 und 104 und die Zwischenelektrode 113 werden zwei aktive Schichten 100 unabhängig geschaltet. Es handelt sich bei den Elektroden 102 und 104 um Anoden und bei der Zwischenelektrode 113 um eine Kathode. Durch Anlegen einer positiven Spannung an die Anoden 104 und 102 und einer negativen Spannung an die Kathode 113 findet beispielsweise ein Ionentransport in die aktiven Schichten 100 statt, welche beispielsweise ein ionenleitfähiges Polymer enthalten. Kathode 113 enthält Wolframoxid, wohingegen die Anoden 102 und 104 Wasserstoffionen enthält. Durch Anlegen der Spannung zwischen der Anode und der Kathode wandern Wasserstoff-Ionen durch das ionenleitfähige Polymer in die Kathode 113 und bilden dort mit Wolframoxid Farbzentren, die einfallendes Licht absorbieren oder reflektieren. Wird danach eine umgekehrte Spannung angelegt, kehrt sich dieser Effekt um, sodass eine Entfärbung der Kathode 113 stattfindet.

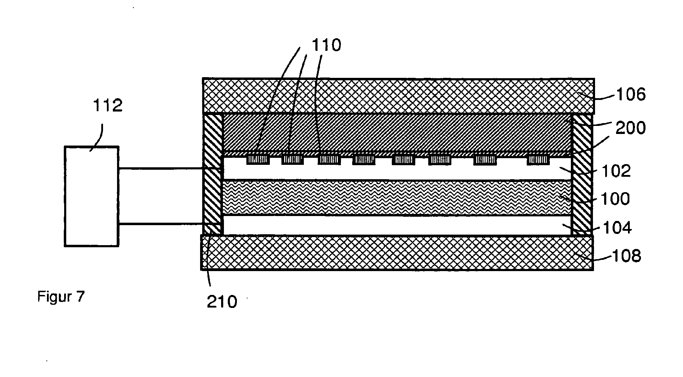

Eine weitere Ausführung ist in der Figur 7 gezeigt. Hier befindet sich ein elektrisch leitfähiges Netzwerk 110 zwischen der Elektrode 102 und einer ersten Schutzschicht 200. Bei der Schutzschicht 200 handelt es sich um eine SiO2-Schicht. In der Figur 7 ist über der ersten Schutzschicht ein gasförmiges Schichtvolumen enthaltend Argon als eine weitere Schutzschicht 200 gezeigt, welche sich zwischen der ersten Schutzschicht 200, der Schutzscheibe 106 aus Natron-Kalk-Glas und Abstandshaltern 210 befindet. Die Abstandshalter 210 sind rahmenförmig und gasdicht ausgelegt. Der Aufbau erfolgt in Anlehnung an eine Mehrfach-Isolierverglasung. Die aktive Schicht 100 enthält einen organischen oder anorganischen Festkörperelektrolyten. Die Wirkung der elektrisch leitfähigen Netzwerke entspricht den Beobachtungen des Ausführungsbeispiels zur Figur 1.

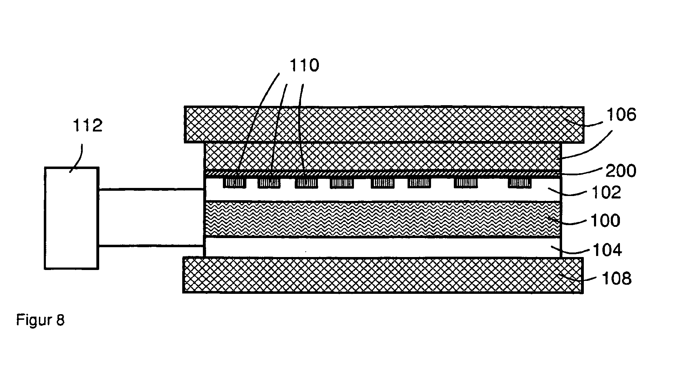

Eine alternative Ausführung dazu ist in der Figur 8 gezeigt. Hier befindet sich ein elektrisch leitfähiges Netzwerk 110 zwischen der Elektrode 102 und einer Schutzschicht 200 enthaltend SiO2. Außerdem ist in der Figur 8 eine erste Schutzscheibe 106 als Haftschicht gezeigt, welche sich zwischen der Schutzschicht 200 und einer inneren weiteren Schutzscheibe 106 befindet. Die äußeren Schutzscheibe 106 und 108 sind Borosilikatglasscheiben. Die innenliegende Schutzscheibe 106 ist eine Haftfolie aus Polyvinylbutyral (PVB). Eine solche PVB-Schicht wird typischerweise bei Temperaturen um ca. 150 °C auf der Schutzschicht 200 aufgeschmolzen, sodass nach Abkühlen ein dauerhafter Verbund zwischen der Schutzschicht 200 und PVB-Schicht 106 vorliegt, welche die aktive Schicht 100 Elektrode 102 und / oder das elektrisch leitfähige Netzwerk 110 und vor äußeren Umwelteinflüssen schützt. Die aktive Schicht 100 enthält einen organischen oder anorganischen Festkörperelektrolyten.

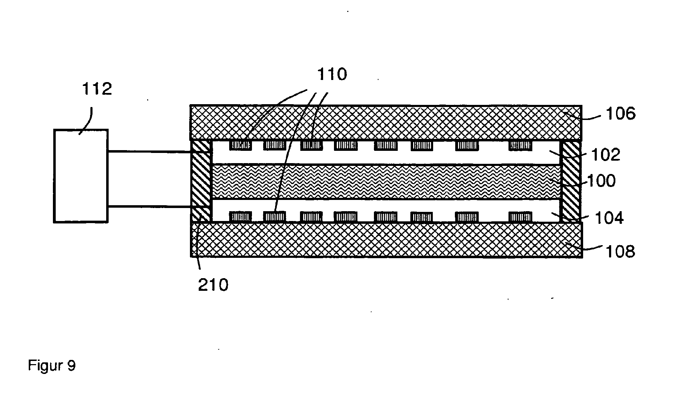

Eine alternative Ausführung der erfindungsgemäßen Schichtstruktur ist in der Figur 9 gezeigt. Die Schichtstruktur enthält zwischen den zwei Elektroden 102 und 104 und den äußeren Schutzscheiben 106 und 108 elektrisch leitfähige Netzwerke 110. Die äußeren Schutzscheiben 106 und 108 sind Natron-Kalk-Glasscheiben. Die aktive Schicht 100 enthält bevorzugt einen organischen Flüssigelektrolyten. Das Volumen der aktiven Schicht wird über rahmenförmige Abstandshalter 210 zwischen den äußeren Schutzscheiben 106 und 108 festgelegt. Die aktive Schicht 100 und die Elektroden 102 und 104 mit elektrisch leitfähigem Netzwerk 110 werden in der Ausführung vor Umwelteinflüssen geschützt. Die Wirkung der elektrisch leitfähigen Netzwerke entspricht den Beobachtungen des Ausführungsbeispiels zur Figur 1.

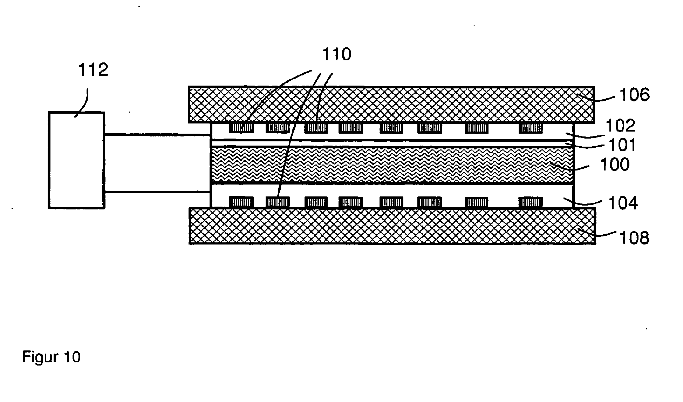

Eine weitere alternative Ausführung ist in der Figur 10 gezeigt. Die Schichtstruktur enthält zwischen den zwei Elektroden 102 und 104 und den äußeren Schutzscheiben 106 und 108 elektrisch leitfähige Netzwerke 110. Die äußeren Schutzscheiben 106 und 108 sind Natron-Kalk-Glasscheiben. Die Elektrodenschicht 102 ist insbesondere mit einer zusätzlichen Schicht 101 von Wolframoxid beschichtet. Die aktive Schicht 100 enthält dabei einen organischen Elektrolyten der teilweise flüssig und teilweise als Festkörper ausgelegt ist. Die aktive Schicht 100 und Elektroden 102 und 104 mit elektrisch leitfähigem Netzwerk 110 werden in der Ausführung vor Umwelteinflüssen geschützt. Die Wirkung der elektrisch leitfähigen Netzwerke entspricht den Beobachtungen des Ausführungsbeispiels zur Figur 1.

### Bezugszeichenliste

- 100: Aktive Schicht
- 101: Schicht mit elektrochromatischem Stoff
- 102: Elektrode
- 104: Elektrode
- 106: Transparente Schutzscheibe
- 108: Transparente Schutzscheibe
- 110: Netzwerk
- 112: Elektrochrome Steuereinheit
- 113: Zwischenelektrode
- 200: Transparente Schutzschicht
- 202: Netzwerk
- 210: Abstandshalter
- 300: Nanoteilchen
- 302: Füllmaterial

- 400: Bereitstellen Elektrode
- 402: Aufbringen Netzwerk
- 404: Erhitzen Netzwerk
- 406: Aufbringen aktive Schicht
- 408: Aufbringen weitere Elektrode

- 500: Bereitstellen Schutzscheibe
- 502: Aufbringen Netzwerk
- 504: Erhitzen Netzwerk
- 506: Aufbringen Elektrode
- 508: Aufbringen aktive Schicht
- 510: Aufbringen weitere Elektrode

## Patentansprüche

1. Elektrochrome Schichtstruktur umfassend mindestens eine elektrochromatisch aktive Schicht (100) und mindestens zwei Elektroden (102; 104), wobei mindestens eine der Elektroden (102; 104) ein elektrisch leitfähiges Netzwerk (110; 202) von Leiterbahnen aufweist und die Leiterbahnen einen Abstand über 1 mm aufweisen, **dadurch gekennzeichnet, dass** die Leiterbahnen eine Breite unter 10 µm aufweisen und Nanoteilchen (300) enthalten, wobei die Nanoteilchen (300) in Form eines Verbundwerkstoffs mit einem Kunststoff (302) die Leiterbahnen bilden.

2. Elektrochrome Schichtstruktur nach Anspruch 1, ferner mit mindestens einer optisch transparenten Schutzscheibe (106), wobei sich das Netzwerk (110; 202) von Leiterbahnen zwischen der aktiven Schicht (100) und der Schutzscheibe (106) befindet.

3. Elektrochrome Schichtstruktur nach Anspruch 2, wobei die Schutzscheibe (106) mindestens enthält Silikatglas, Germanium, Silizium, Saphir, Polystyrol, Polyamid, Polyester, Polyvinylchlorid, Polycarbonat, Ethylen-Vinyl-Acetat, plastifiziertes Polyvinyl-Butyral, Polyimid, Polyethylenterephthalat, Polyethylen, Polypropylen, Polyurethan, Ionomere, Polymethylmethacrylat, Copolymere und / oder Kombinationen davon.

4. Elektrochrome Schichtstruktur nach einem der Ansprüche 1 bis 3, mit einer optisch transparenten Schutzschicht (200), wobei sich das Netzwerk (110; 202) von Leiterbahnen zwischen der aktiven Schicht (100) und der optisch transparenten Schutzschicht (200) befindet.

5. Elektrochrome Schichtstruktur nach Anspruch 4, wobei die optisch transparente Schutzschicht (200) mindestens eine Schicht Siliziumdioxid, Siliziumnitrid, Zinkoxid, Zinnoxid, Indiumoxid und / oder eine gasförmige Schicht enthaltend Argon, Xenon, Stickstoff, Luft und / oder Gemische davon aufweist.

6. Elektrochrome Schichtstruktur nach Anspruch 4 oder 5, wobei die Schutzschicht (200) ferner ein gasförmiges Schichtvolumen enthaltend Argon, Xenon, Stickstoff, Luft und / oder Gemische davon mit einem Druck von 1000 Pa bis 200.000 Pa aufweist.

7. Elektrochrome Schichtstruktur nach einem der Ansprüche 1 bis 6, enthaltend mindestens eine Zwischenelektrode (113), die zwischen mindestens zwei elektrochromatisch aktiven Schichten (100) aufgebracht ist und wobei die Zwischenelektrode (113) ein elektrisch leitfähiges Netzwerk (110; 202) von Leiterbahnen aufweist und die Leiterbahnen Nanoteilchen (300) enthalten.

8. Elektrochrome Schichtstruktur nach einem der Ansprüche 1 bis 7, wobei die Nanoteilchen (300) Silberteilchen und / oder elektrisch leitfähigen Kohlenstoff enthalten.

9. Elektrochrome Schichtstruktur nach einem der Ansprüche 1 bis 8, wobei die Nanoteilchen (300) einen Durchmesser von 1 nm bis 500 nm aufweisen, vorzugsweise von 5 nm bis 100 nm.

10. Elektrochrome Vorrichtung mit einer Schichtstruktur nach einem der Ansprüche 1 bis 9, wobei die Schichtstruktur mit einem Steuergerät (112) elektrisch kontaktiert ist.

11. Elektrochrome Vorrichtung nach Anspruch 10, wobei die Schichtstruktur auf mindestens einer Schutzscheibe (108) angeordnet ist, wobei die Schutzscheibe (108) transparent ist.

12. Elektrochrome Vorrichtung nach Anspruch 10 oder 11, wobei es sich bei der Vorrichtung um eine Verbundglasscheibe handelt.

13. Elektrochrome Vorrichtung nach einem der Ansprüche 10 bis 12, wobei es sich bei der Vorrichtung um eine Doppel- oder Mehrfachisolierverglasung handelt.

14. Verfahren zur Herstellung einer elektrochromen Schichtstruktur nach einem der Ansprüche 1 bis 9, die mindestens eine elektrochromatisch aktive Schicht (100) und zwei Elektroden (102; 104) aufweist, wobei
- ein Netzwerk (110; 202) von Nanoteilchen (300) und flüssigem Kunststoff (302) in der Schichtstruktur aufgebaut wird und
- das Netzwerk (110; 202) von Nanoteilchen (300) und flüssigem Kunststoff (302) zur Bildung eines elektrisch leitfähigen Netzwerks (110; 202) von Leiterbahnen erhitzt wird, so dass die Nanoteilchen (300) in Form eines Verbundwerkstoff mit dem Kunststoff (302) die Leiterbahnen bilden.

15. Verfahren nach Anspruch 14, wobei das Netzwerk (110; 202) von Nanoteilchen (300) durch Druckverfahren wie Siebdruck, Gravurwalzendruck, Tintenstrahldruck, Aerosoljet-Druck, Flexodruck, Impulsjet-Druck und/ oder Kombinationen davon aufgebracht wird.

16. Verfahren nach Anspruch 14 oder 15, wobei das Netzwerk (110; 202) von Nanoteilchen (300) durch eine Dispersion aufgebracht wird, die Nanoteilchen (300) und einen flüssigen Kunststoff enthält.

17. Verfahren nach einem der vorigen Ansprüche 14 bis 16, wobei das Netzwerk (110; 202) von Nanoteilchen (300) über Wärmeleitung und Wärmestrahlung wie Infrarot-, Ultraviolett-, Mikrowellenstrahlung, Laserlicht und/ oder Kombinationen davon erhitzt wird.

18. Verwendung der elektrochromen Schichtstruktur nach einem der Ansprüche 1 bis 9 und der elektrochromen Vorrichtung nach einem der Ansprüche 10 bis 13 in einer Einfach-, Verbund-, Doppel- oder Mehrfachverglasung von Gebäuden oder Fahrzeugen.

## Claims

1. Electrochromic layer structure comprising at least one electrochromatically active layer (100) and at least two electrodes (102; 104), wherein at least one of the electrodes (102; 104) has an electrically conductive network (110; 202) of conductor tracks and the conductor tracks have a distance of more than 1 mm between them, **characterized in that** the conductor tracks have a width of less than 10 µm and contain nanoparticles (300), wherein the nanoparticles (300) in the form of a composite material with a plastic (302) form the conductor tracks.

2. Electrochromic layer structure according to claim 1, also with at least one optically transparent protective pane (106), wherein the network (110; 202) of conductor tracks is located between the active layer (100) and the protective pane (106).

3. Electrochromic layer structure according to claim 2, wherein the protective pane (106) contains at least silicate glass, germanium, silicon, sapphire, polystyrene, polyamide, polyester, polyvinyl chloride, polycarbonate, ethylene vinyl acetate, plasticized polyvinyl butyral, polyimide, polyethylene terephthalate, polyethylene, polypropylene, polyurethane, ionomers, polymethyl methacrylate, copolymers, and/or combinations thereof.

4. Electrochromic layer structure according to one of claims 1 through 3, with an optically transparent protective layer (200), wherein the network (110; 202) of conductor tracks is located between the active layer (100) and the optically transparent protective layer (200).

5. Electrochromic layer structure according to claim 4, wherein the optically transparent protective layer (200) has at least one layer of silicon dioxide, silicon nitride, zinc oxide, tin oxide, indium oxide, and/or a gaseous layer containing argon, xenon, nitrogen, air, and/or mixtures thereof.

6. Electrochromic layer structure according to claim 4 or 5, wherein the protective layer (200) also has a gaseous layer volume containing argon, xenon, nitrogen, air, and/or mixtures thereof with a pressure of 1000 Pa to 200,000 Pa.

7. Electrochromic layer structure according to one of claims 1 through 6, including at least one intermediate electrode (113) that is introduced between at least two electrochromatically active layers (100) and wherein the intermediate electrode (113) has an electrically conductive network (110; 202) of conductor tracks and the conductor tracks contain nanoparticles (300).

8. Electrochromic layer structure according to one of claims 1 through 7, wherein the nanoparticles (300) include silver particles and/or electrically conductive carbon.

9. Electrochromic layer structure according to one of claims 1 through 8, wherein the nanoparticles (300) have a diameter of 1 nm to 500 nm, preferably, of 5 nm to 100 nm.

10. Electrochromic device with a layer structure according to one of claims 1 through 9, wherein the layer structure is in electrical contact with a control unit (112).

11. Electrochromic device according to claim 10, wherein the layer structure is arranged on at least one protective pane (108), with the protective pane (108) being transparent.

12. Electrochromic device according to claim 10 or 11, wherein the device is a laminated glass pane.

13. Electrochromic device according to one of claims 10 through 12, wherein the device is a double-insulating or multi-insulating glazing.

14. Method for producing an electrochromic layer structure according to one of claims 1 through 9, that has at least one electrochromatically active layer (100) and two electrodes (102; 104), wherein
- a network (110; 202) of nanoparticles (300) and liquid plastic (302) is constructed in the layer structure, and
- the network (110; 202) of nanoparticles (300) and liquid plastic (302) is heated to form an electrically conductive network (110; 202) of conductor tracks, such that the nanoparticles (300) in the form of a composite material with the plastic (302) form the conductor tracks.

15. Method according to claim 14, wherein the network (110; 202) of nanoparticles (300) is applied by printing methods such as screen printing, engraving cylinder printing, inkjet printing, aerosol jet printing, flexography, pulse jet printing, and/or combinations thereof.

16. Method according to claim 14 or 15, wherein the network (110; 202) of nanoparticles (300) is applied using a dispersion that includes nanoparticles (300) and a liquid plastic.

17. Method according to one of the preceding claims 14 through 16, wherein the network (110; 202) of nanoparticles (300) is heated by thermal conduction and thermal radiation such as infrared, ultraviolet, microwave radiation, laser light, and/or combinations thereof.

18. Use of the electrochromic layer structure according to one of claims 1 through 9 and of the electrochromic device according to one of claims 10 through 13 in a single, composite, double or multi-glazing of buildings or motor vehicles.

## Revendications

1. Structure en couches électrochrome comprenant au moins une couche électrochromatiquement active (100) et au moins deux électrodes (102 ; 104), au moins l'une des électrodes (102 ; 104) présentant un réseau (110 ; 202) conducteur de l'électricité formé de pistes conductrices, et les pistes conductrices présentant un écartement supérieur à 1 mm, **caractérisée en ce que** les pistes conductrices présentent une largeur de moins de 10 µm et contiennent des nanoparticules (300), les nanoparticules (300) formant les pistes conductrices sous la forme d'une matière composite avec une matière plastique (302).

2. Structure en couches électrochrome selon la revendication 1, comportant en outre au moins une vitre de protection optiquement transparente (106), le réseau (110 ; 202) de pistes conductrices se trouvant entre la couche active (100) et la vitre de protection (106).

3. Structure en couches électrochrome selon la revendication 2, dans laquelle la vitre de protection (106) contient au moins du verre de silicate, du germanium, du silicium, du saphir, du polystyrène, du polyamide, du polyester, du poly(chlorure de vinyle), du polycarbonate, du copolymère éthylène-acétate de vinyle, du polyvivyl butyral plastifié, du polyimide, du poly(téréphtalate d'éthylène), du polyéthylène, du polypropylène, du polyuréthane, des ionomères, du poly(méthacrylate de méthyle), leurs copolymères et/ou combinaisons.

4. Structure en couches électrochrome selon l'une des revendications 1 à 3, comportant une couche protectrice optiquement transparente (200), le réseau (110 ; 202) de pistes conductrices se trouvant entre la couche active (100) et la couche de protection optiquement transparente (200).

5. Structure en couches électrochrome selon la revendication 4, dans laquelle la couche de protection optiquement transparente (200) présente au moins une couche de dioxyde de silicium, de nitrure de silicium, d'oxyde de zinc, d'oxyde d'étain, d'oxyde d'indium et/ou une couche gazeuse contenant de l'argon, du xénon, de l'azote, de l'air et/ou leurs mélanges.

6. Structure en couches électrochrome selon l'une des revendications 4 ou 5, dans laquelle la couche de protection (200) présente en outre un volume de couche gazeux contenant de l'argon, du xénon, de l'azote, de l'air et/ou leurs mélanges sous une pression de 1000 Pa à 200 000 Pa.

7. Structure en couches électrochrome selon l'une des revendications 1 à 6, contenant au moins une électrode intermédiaire (113) qui est déposée entre au moins deux couches électrochromatiquement actives (100), et dans laquelle l'électrode intermédiaire (113) présente un réseau (110 ; 202) conducteur de l'électricité formé de pistes conductrices, et les pistes conductrices contiennent des nanoparticules (300).

8. Structure en couches électrochrome selon l'une des revendications 1 à 7, dans laquelle les nanoparticules (300) contiennent des particules d'argent et/ou du carbone conducteur de l'électricité.

9. Structure en couches électrochrome selon l'une des revendications 1 à 8, dans laquelle les nanoparticules (300) présentent un diamètre de 1 nm à 500 nm, de préférence de 5 nm à 100 nm.

10. Dispositif électrochrome possédant une structure en couches selon l'une des revendications 1 à 9, dans lequel la structure en couches est mise en contact électrique avec un appareil de commande (112).

11. Dispositif électrochrome selon la revendication 10, dans lequel la structure en couches est disposée sur au moins une vitre de protection (108), la vitre de protection (108) étant transparente.

12. Dispositif électrochrome selon l'une des revendications 10 ou 11, dans lequel le dispositif est une vitre de verre composite.

13. - Dispositif électrochrome selon l'une des revendications 10 à 12, dans lequel le dispositif est constitué par un vitrage isolant double ou multiple.

14. Procédé de fabrication d'une structure en couches électrochrome selon l'une des revendications 1 à 9, qui présente au moins une couche électrochromatiquement active (100) et deux électrodes (102 ; 104, dans lequel :
- un réseau (110 ; 202) de nanoparticules (300) et de matière plastique liquide (301) est formé dans la structure en couches ; et
- le réseau (110 ; 202) de nanoparticules (300) et de matière plastique liquide (302) est chauffé pour former un réseau (110 ; 202) conducteur de l'électricité, formé de pistes conductrices, de telle sorte que les nanoparticules (300) forment les pistes conductrices sous la forme d'une matière composite avec la matière plastique (302).

15. Procédé selon la revendication 14, dans lequel le réseau (110 ; 202) de nanoparticules (300) est déposé par un procédé d'impression tel que la sérigraphie, l'impression par cylindres gravés, l'impression à jet d'encre, l'impression à jet d'aérosol, l'impression flexographique, l'impression à jet à impulsions et/ou leurs combinaisons.

16. Procédé selon l'une des revendications 14 ou 15, dans lequel le réseau (110 ; 202) de nanoparticules (300) est déposé par une dispersion qui contient les nanoparticules (300) et une matière plastique liquide.

17. Procédé selon l'une des revendications précédentes 14 à 16, dans lequel le réseau (110 ; 202) de nanoparticules (300) est chauffé par conduction thermique et rayonnement thermique tel qu'un rayonnement infrarouge, ultraviolet, micro-ondes, une lumière laser et/ou leurs combinaisons.

18. Utilisation de la structure en couches électrochrome selon l'une des revendications 1 à 9 et du dispositif électrochrome selon l'une des revendications 10 à 13, dans un vitrage simple, composite, double ou multiple de bâtiments ou de véhicules.
